# EUROPEAN PATENT APPLICATION

(11) **EP 2 466 280 A1**
(43) Date of publication of application: **20.06.2012**
(21) Application number: 10195691.0
(22) Date of filing: 17.12.2010
(51) Int. Cl.: G01J 1/46, G01J 5/00, G01J 5/08, G08B 13/19

(54) **Human infrared recipient processor**

(71) Applicant: Dongguan Ju Yang Electronics Limited, Dongguan Guangdong (CN)
(72) Inventor: Lee, Tasi-Jing, Guandong (CN); Chen, Ming-Yun, Guandong (CN)
(74) Representative: Baldwin, Mark

(57) **Abstract**

An IP processing technology, and more particularly to a human infrared recipient processor, which comprising: an amplifying circuit, a switch control circuit for output of switching signals, a PIR for obtaining human IR signals, a PHOT for obtaining brightness signals, a main controller IC1 used for A/D conversion and digital filtering of human IR signals and logical control/output of high-/low-level signals by the brightness and switching signals, as well as an external output circuit for controlling the working states depending on high-/low-level signals; said main controller IC1 is a SD7823; the human infrared recipient processor of the present invention features simple construction, higher SNR, stability and sensitivity as well as stronger logical functions.

## Description

### BACKGROUND OF INVENTION

### 1. Field of the Invention

The present invention relates generally to IR processing technology, and more particularly to a human infrared recipient processor.

### 2. Description of Related Art

The human infrared recipient processor, represented by a common IR sensing control technology, is widely applied to lightings, alarm systems and temperature measurement, etc. It generally comprises: PIR (Passive Infrared Radiation), operational amplifier, controller and output circuit.

According to the operating principle of PIR, its IR sensing source is a thermoelectric substance, which may, in the case of change of the human body's received infrared intensity, lose the charge balance and start to release current, thus obtaining IR signals sent by the human body. Moreover, the operational amplifier often employs LM324. For example, when the human infrared recipient processor is applied to LED sensor light, IR signals sensed by PIR are amplified and output as analog signals, then the controller is used to control the working states of LED sensor light for auto-control effect. Yet, existing human infrared recipient processor will filter tiny electric signals output by PIR, and amplify them to the extent that can be identified by the logic level, so as to control the output circuit; as the analog signal is vulnerable to temperature change, and the circuit is complex, there are some shortcomings such as: lower SNR, reliability and sensitivity without complex logic control.

### SUMMARY OF THE INVENTION

An object of the invention is to provide a human infrared recipient processor, which features simple construction, higher SNR, stability and sensitivity as well as strong logic functions and/or provide an alternative to existing technology.

The invention adopts the following technology schemes: a human infrared recipient processor, which comprises an amplifying circuit, a switch control circuit for output of switching signals and PIR for obtaining human IR signals; it also comprises a photosensitive tube PHOT for obtaining brightness signals, a main controller IC1 used for A/D conversion and digital filtering of human IR signals and logical control/output of high-/low-level signals by the brightness and switching signals, as well as an external output circuit for controlling the working states depending on high-/low-level signals.

Said main controller IC1 is a SD7823, PIR is connected with the input end of amplifying circuit, the output end of amplifying circuit is connected with 7^{th} pin of the main controller IC1, the output end of switch control circuit is connected with 4^{th} pin of the main controller IC1, the output end of photosensitive tube PHOT is connected with 5^{th} pin of the main controller IC1, and 2^{nd} pin of the main controller IC1 is connected with the input end of the external output circuit.

Said amplifying circuit may comprise a triode Q2, resistor R1, R3, R5 and capacitor C30; electrode D of said PIR is connected with electrode B of Q2 and one end of R1, the other end of R1 is connected with electrode E of Q2, which is connected with the power supply for PIR; electrode C of Q2 is connected with one end of R3; the other end of R3 is connected with electrode S of PIR and one end of R5, anode of C30 is connected with electrode S of PIR, the other end of R5, cathode of C30 and electrode G of PIR are grounded.

Said Q2 may be a BC857, the resistance of R1 may be 2.2MΩ, that of R3 may be 220KΩ, and that of R5 may be 220KΩ; the capacitance of C30 may be 100µF; PIR may be a RE200.

The human infrared recipient processor may also comprise a power circuit and a sampling circuit; of which said sampling circuit may comprise a resistor R7 and R8; the output end of power circuit is connected with one end of R7; the other end of R7 is connected with 6^{th} pin of the main controller IC1 and one end of R8; the other end of R8 is connected with 2^{nd} pin of photosensitive tube PHOT, and 1^{st} pin of photosensitive tube PHOT is connected with 5^{th} pin of the main controller IC1.

The human infrared recipient processor may also comprise a stabilizing and filtering circuit, which comprises a voltage-stabilizing controller U1, capacitor C1, C27, C32, C33, and resistor R19, R22; of which, voltage-stabilizing controller U1 is a HT7130; the output end of said power circuit is also connected with 2^{nd} pin of the voltage-stabilizing controller U1 and anode of C1, 3^{rd} pin of the voltage-stabilizing controller U1 is connected with 8^{th} pin of the main controller IC1, anode of C27 and one end of R19; the other end of R19 is connected with anode of C32 and one end of R22; the other end of R22 is connected with anode of C33 and electrode E of Q2; C1, C27, C32, C33 and 1^{st} pin of the voltage-stabilizing controller U1 are grounded, and 1^{st} pin of the main controller IC1 is grounded.

Said photosensitive tube PHOT may be a L-32EOPTIC, the resistance of R7 may be 240KΩ, and that of R8 may be 220KΩ; the capacitance of C1, C27, C32 and C33 may be 100µF; the resistance of R19 may be 39KΩ, and that of R22 may be 3.3KΩ.

The voltage output by 3^{rd} pin of said voltage-stabilizing controller U1 may be +2.5V.

The human infrared recipient processor may also comprise a low-voltage indicating circuit, which may comprise LED2, R14 and C23; 3^{rd} pin of the main controller IC1 is connected with cathode of LED2 and one end of C23; anode of LED2 and the other end of C23 are connected with one end of R14; the other end of R14 is connected with 3^{rd} pin of the voltage-stabilizing controller U1.

Said switch control circuit may comprise an interface J1, J2 and 8-pin switch SW1 with ON, OFF and AUTO functions; 7^{th} pin of SW1 is connected with 4^{th} pin of the main controller IC1, 2^{nd} pin of J1, J2; 1^{st} pin of J2 is connected with 3^{rd} pin of SW1, 1^{st} pin of J1 is connected with input end of the power circuit.

Said external output circuit may also comprise an LED1, R12, Q1, C5 and R10; triode Q1 is an APM2302AA; 2^{nd} pin of said main controller IC1 is connected with electrode B of Q1 and one end of R10/C5; the other end of R10/C5 and electrode E of Q1 are grounded; electrode C of Q1 is connected with cathode of LED 1, anode of LED 1 is connected with one end of R12, and the other end of R12 is connected with output end of the power circuit.

### BRIEF DESCRIPTION OF THE DRAWINGS

FIG. 1: a circuit diagram of a human infrared recipient processor; and
FIG. 2: a circuit diagram of the stabilizing and filtering circuit of the processor of FIG. 1.

### DETAILED DESCRIPTION OF THE ILLUSTRATED EMBODIMENT

The following is a detailed description of the invention based on the attached drawings:

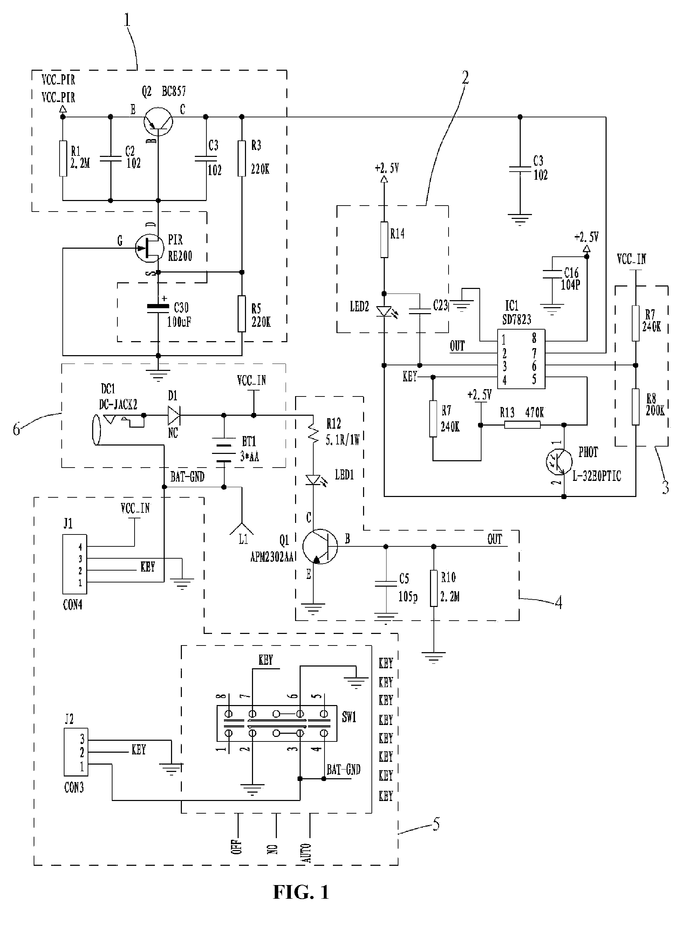

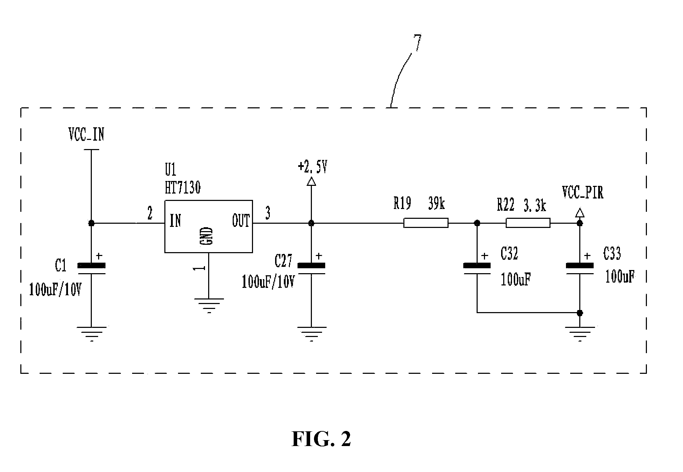

Referring to FIGS. 1 and 2 for preferred embodiment 1, the human infrared recipient processor comprises an amplifying circuit 1, a switch control circuit 5 for output of switching signals and PIR for obtaining human IR signals; it also comprises a photosensitive tube PHOT for obtaining brightness signals, a main controller IC1 used for A/D conversion and digital filtering of human IR signals and logical control/output of high-/low-level signals by the brightness and switching signals, as well as an external output circuit 4 for controlling the working states depending on high-/low-level signals.

The operating principle of said human infrared recipient processor is that: PIR inputs human IR signals of extremely low static current, then outputs tiny electric signals, which are subject to A/D conversion and digital filtering by the main controller IC1, then high-/low-level signals are output depending on the brightness and switching signals so as to control external output circuit 4. With introduction of digitalization, the human infrared recipient processor of high sensitivity is slightly affected by temperature; the filtering by software/hardware ensures stronger immunity from interference, and reduces the circuit process, so it presents simple circuit structure, higher SNR and reliability; the main controller IC1 could improve logic functions and reduce power consumption with introduction of optimized filtering and signal judgment algorithm.

Said main controller IC1 is a SD7823, PIR is connected with input end of the amplifying circuit 1, the output end of the amplifying circuit 1 is connected with 7^{th} pin of the main controller IC1, the output end of the switch control circuit 5 is connected with 4^{th} pin of the main controller IC1, the output end of the photosensitive tube PHOT is connected with 5^{th} pin of the main controller IC1, 2^{nd} pin of the main controller IC1 is connected with input end of the external output circuit 4. The brightness signals are converted into electrical signals by PHOT and then input to 5^{th} pin of the main controller IC1, and subject to subsequent operation after A/D conversion and digital filtering by IC1.

Said amplifying circuit 1 consists of Q2, R1, R3, R5 and C30; electrode D of PIR is connected with electrode B of Q2 and one end of R1; the other end of R1 is connected with electrode E of Q2, which is then connected with the power supply for PIR; electrode C of Q2 is connected with one end of R3; the other end of R3 is connected with electrode S of PIR and one end of R5, anode of C30 is connected with electrode S of PIR, the other end of R5, cathode of C30 and electrode G of PIR are grounded. IR signals sent by the human body are received by PIR and converted into electrical signals, then amplified by the amplifying circuit 1 consisting of Q2, R1, R3, R5 and C30, next input to 7^{th} pin of the main controller IC1, and subject to subsequent operation after digital filtering by the main controller IC1.

As a preferred embodiment, said Q2 is a BC857; the resistance of R1 is 2.2MΩ, that of R3 is 220KΩ, that of R5 is 220KΩ, and the capacitance of C30 is 100µF; PIR is a RE200. The aforementioned parameters can be set, where applicable.

Furthermore, said human infrared recipient processor also comprises: power circuit 6, sampling circuit 3, stabilizing and filtering circuit 7, and low-voltage indicating circuit 2. Said sampling circuit 3 consists of R7 and R8, the output end of power circuit 6 is connected with one end of R7; the other end of R7 is connected with 6^{th} pin of the main controller IC1 and one end of R8; the other end of R8 is connected with 2^{nd} pin of PHOT, and 1^{st} pin of PHOT is connected with 5^{th} pin of the main controller IC1. Said stabilizing and filtering circuit 7 consists of voltage-stabilizing controller U1, C1, C27, C32, C33, R19 and R22; of which the voltage-stabilizing controller U1 is an HT7130; the output end of said power circuit 6 is also connected with 2^{nd} pin of the voltage-stabilizing controller U1 and anode of C1; 3^{rd} pin of the voltage-stabilizing controller U1 is connected with 8^{th} pin of the main controller IC1, anode of C27 and one end of R19; the other end of R19 is connected with anode of C32 and one end of R22; the other end of R22 is connected with anode of C33 and electrode E of Q2, C1, C27, C32, C33 and 1^{st} pin of the voltage-stabilizing controller U1 are grounded, whilst 1^{st} pin of the main controller IC1 is grounded. Said low-voltage indicating circuit 2 consists of LED2, R14 and C23; 3^{rd} pin of the main controller IC1 is connected with cathode of LED2 and one end of C23; anode of LED2 and the other end of C23 are connected with one end of R14; the other end of R14 is connected with 3^{rd} pin of the voltage-stabilizing controller U1.

Voltage-stabilizing controller U1 is used to stabilize the input voltage of 8^{th} pin of the main controller IC1(i.e.: voltage output by 3^{rd} pin of the voltage-stabilizing controller U1), e.g.: 2.5V; of which C1 and C27 match the voltage-stabilizing controller U1; R19, R22, C32 and C33 constitute a power filter network of PIR; of which, the sampling circuit 3 transmits the power voltage to 6^{th} pin of the main controller IC1; when the sampling circuit 3 detects extremely low working voltage of voltage-stabilizing controller U1, LED2 of low-voltage indicating circuit 2 is highlighted, reminding the users of replacing the power supply. In the present invention, the power circuit 6 is composed of rechargeable batteries.

As a preferred embodiment, said photosensitive tube PHOT is an L-32EOPTIC; the resistance of R7 is 240KΩ, that of R8 is 220KΩ, the capacitance of C1, C27, C32 and C33 is 100µF, the resistance of R19 is 39KΩ, and that of R22 is 3.3KΩ; the aforementioned parameters can be set, where applicable.

As a preferred embodiment, said switch control circuit 5 consists of interface J1, J2, and 8-pin switch SW1 with ON, OFF and AUTO functions; 7^{th} pin of SW1 is connected with 4^{th} pin of the main controller IC1, 2^{nd} pin of J1, J2; 1^{st} pin of J2 is connected with 3^{rd} pin of SW1, 1^{st} pin of J1 is connected with input end of the power circuit 6. The switch control circuit 5 outputs high-/low-level signals to 4^{th} pin of the main controller IC1, so as to control the working states of entire circuit, including: ON, OFF and AUTO.

Said human infrared recipient processor of the present invention is applied to LED sensor light; as a preferred embodiment, said external output circuit 4 consists of LED1, R12, Q1, C5 and R10; Q1 is an APM2302AA; 2^{nd} pin of said main controller IC1 is connected with electrode B of Q1, one end of R10/C5, the other end of R10/C5 and electrode E of Q1 are grounded; electrode C of Q1 is connected with cathode of LED1, and anode of LED1 is connected with one end of R12; the other end of R12 is connected with output end of the power circuit 6. Said external output circuit 4 forms an LED control circuit; in such case, 2^{nd} pin of the main controller IC1 outputs high-/low-level signals to electrode B of Q1 and control the switching of Q1, thereby controlling the on/off state of LED 1. In addition to the circuit structure in aforementioned preferred embodiment, the external output circuit 4 can be designed where necessary.

The difference of preferred embodiment 2 with preferred embodiment 1 lies in that, the external output circuit 4 of the human infrared recipient processor is an alarm driving circuit that can be designed, where necessary, for the alarming purpose.

The difference of preferred embodiment 3 with preferred embodiment 1 lies in that, the external output circuit 4 of the human infrared recipient processor is a temperature measurement driving circuit that can be designed, where necessary, for the temperature measurement purpose. Moreover, said human infrared recipient processor of the present invention can also be applied to other fields, where the external output circuit 4 can be designed accordingly.

The human infrared recipient processor of the described embodiments comprises a PHOT for obtaining brightness signals, a main controller IC1 used for A/D conversion and digital filtering of human IR signals and logical control/output of high-/low-level signals by the brightness and switching signals, as well as an external output circuit for controlling the working states depending on high-/low-level signals; said main controller IC 1 is a SD7823; PIR is connected with input end of the amplifying circuit, the output end of the amplifying circuit is connected with 7^{th} pin of the main controller IC1, the output end of the switch control circuit is connected with 4^{th} pin of the main controller IC1, the output end of PHOT is connected with 5^{th} pin of the main controller IC1, and 2^{nd} pin of the main controller IC1 is connected with the input end of the external output circuit. As for said human infrared recipient processor, PIR outputs tiny electric signals, which are subject to A/D conversion and digital filtering by the main controller IC1, then high-/low-level signals are controlled logically and output depending on the brightness and switching signals, so as to control external output circuit and reduce the circuit process; thus it presents simple circuit structure, higher SNR, stability and sensitivity as well as stronger logic functions. Thus in summary, a control system that provides output signals to an external circuit comprises a control element that receives input signals indicative of the presence of a human output by a passive infrared sensor and digitizes said signals, a photosensitive tube and switching connected with said control element. The output signals are based on operation of said control element in response to said input signals from said passive infrared sensor and signals from said photosensitive tube and switching.

The above is a detailed description of the present invention based on typical preferred embodiments. However, it should be appreciated that the present invention is capable of a variety of embodiments and various modifications by those skilled in the art, and all such equivalent variations or changes shall be embraced within the scope of the following claims.

## Claims

1. A human infrared recipient processor comprising an amplifying circuit (1), a switch control circuit (5) for output of switching signals and PIR for obtaining human IR signals, **characterized in that**:
it also comprises a PHOT for obtaining the brightness signals, a main controller IC1 used for A/D conversion and digital filtering of human IR signals and logical control/output of high-/low-level signals by the brightness and switching signals, as well as an external output circuit (4) for controlling the working states depending on high-/low-level signals;
said main controller IC1 is a SD7823; PIR is connected with the input end of the amplifying circuit; the output end of the amplifying circuit is connected with 7^{th} pin of the main controller IC1, the output end of the switch control circuit is connected with 4^{th} pin of the main controller IC1, the output end of PHOT is connected with 5^{th} pin of the main controller IC1, and 2^{nd} pin of the main controller IC1 is connected with the input end of the external output circuit.

2. A processor as claimed in Claim 1, wherein said amplifying circuit (1) consists of triode Q2, resistor R1, R3, R5 and capacitor C30; electrode D of said PIR is connected with electrode B of Q2 and one end of R1, the other end of R1 is connected with electrode E of Q2, which is connected with the power supply for PIR; electrode C of Q2 is connected with one end of R3; the other end of R3 is connected with electrode S of PIR and one end of R5, anode of C30 is connected with electrode S of PIR, the other end of R5, cathode of C30 and electrode G of PIR are grounded.

3. A processor as claimed in Claim 2, wherein said Q2 is a BC857, the resistance of R1 is 2.2MΩ, that of R3 is 220KΩ, and that of R5 is 220KΩ; the capacitance of C30 is 100µF; PIR is a RE200.

4. A processor as claimed in Claim 1, 2 or 3, further comprising a power circuit and a sampling circuit, wherein said sampling circuit consists of resistor R7 and R8; the output end of power circuit is connected with one end of R7; the other end of R7 is connected with 6^{th} pin of the main controller IC 1 and one end of R8; the other end of R8 is connected with 2^{nd} pin of PHOT, and 1^{st} pin of PHOT is connected with 5^{th} pin of the main controller IC1.

5. A processor as claimed in Claim 4, further comprising a stabilizing and filtering circuit, which consists of voltage-stabilizing controller U1, capacitor C1, C27, C32, C33, and resistor R19, R22; wherein said voltage-stabilizing controller U1 is a HT7130; the output end of said power circuit is also connected with 2^{nd} pin of the voltage-stabilizing controller U1 and anode of C1, 3^{rd} pin of the voltage-stabilizing controller U1 is connected with 8^{th} pin of the main controller IC1, anode of C27 and one end of R19; the other end of R19 is connected with anode of C32 and one end of R22; the other end of R22 is connected with anode of C33 and electrode E of Q2; C1, C27, C32, C33 and 1^{st} pin of the voltage-stabilizing controller U1 are grounded, and 1^{st} pin of the main controller IC 1 is grounded.

6. A processor as claimed in Claim 5, wherein said PHOT is a L-32EOPTIC, the resistance of R7 is 240KΩ, and that of R8 is 220KΩ; the capacitance of C1, C27, C32 and C33 is 100µF; the resistance of R19 is 39KΩ, and that of R22 is 3.3KΩ.

7. A processor as claimed in Claim 5 or 6, wherein the voltage output by 3^{rd} pin of said voltage-stabilizing controller U1 is +2.SV.

8. A processor as claimed in Claim 5, 6 or 7, further comprising a low-voltage indicating circuit, which consists of LED2, R14 and C23; wherein said 3^{rd} pin of the main controller IC1 is connected with cathode of LED2 and one end of C23; anode of LED2 and the other end of C23 are connected with one end of R14; the other end of R14 is connected with 3^{rd} pin of the voltage-stabilizing controller U1 .

9. A processor as claimed in any one of Claims 4 to 8, wherein said switch control circuit consists of interface J1, J2 and 8-pin switch SW1 with ON, OFF and AUTO functions; 7^{th} pin of SW1 is connected with 4^{th} pin of the main controller IC1, 2^{nd} pin of J1, J2_{;} 1^{st} pin of J2 is connected with 3^{rd} pin of SW1, 1^{st} pin of J1 is connected with input end of the power circuit.

10. The human infrared recipient processor as claimed in any one of Claims 4 to 9, wherein said external output circuit also consists of LED1, R12, Q1, C5 and R10; triode Q1 is an APM2302AA; 2^{nd} pin of said main controller IC1 is connected with electrode B of Q1 and one end of R10/C5; the other end of R10/C5 and electrode E of Q1 are grounded; electrode C of Q1 is connected with cathode of LED1, anode of LED1 is connected with one end of R12, and the other end of R12 is connected with output end of the power circuit.
